# DEMANDE DE BREVET EUROPEEN

(11) **EP 2 538 528 A2**
(43) Date de publication de la demande: **26.12.2012**
(21) Numéro de dépôt: 12173218.4
(22) Date de dépôt: 22.06.2012
(51) Int. Cl.: H02K 15/03, H02K 1/27

(54) **Rotor de moteur électrique**

(30) Priorité: 24.06.2011 FR 1155623
(71) Demandeur: Faurecia Bloc Avant, 92000 Nanterre (FR); Phenix International, 70100 Gray (FR)
(72) Inventeur: Aubry, Jean-Marcel, 90140 BOUROGNE (FR); Brami, Luc, 92700 COLOMBES (FR)
(74) Mandataire: Domenego, Bertrand

(57) **Abrégé**

Ce Rotor comprend une structure de support (5) munie d'au moins un logement (10) dans lequel est logé un aimant permanent (15). Le logement (10) comprend une paroi extérieure (35), laquelle comprend au moins une languette de retenue (48) en saillie radialement vers l'intérieur du logement (10) à partir de la paroi extérieure (35) du logement (10), de sorte à exercer un appui sur l'aimant (15) de manière à bloquer l'aimant (15) dans le logement (10) selon la direction radiale.

## Description

La présente invention concerne un rotor de moteur électrique comprenant une structure de support munie d'au moins un logement dans lequel est logé un aimant permanent, le logement comprenant une paroi extérieure.

Dans les rotors à concentration de flux, la gestion du flux magnétique est complexe et en particulier plus complexe que dans le cas d'un rotor à aimants de surface. En effet, dans les rotors à concentration de flux, le flux magnétique principal est transmis transversalement depuis les aimants vers la structure de support, qui, à son tour, conduit le flux magnétique vers le stator du moteur. Pour assurer un fonctionnement optimal du moteur, il est important de minimiser les fuites de flux magnétique entre les aimants et la structure de support. Cette minimisation passe notamment par une minimisation de l'entrefer entre les aimants et la structure de support selon la direction du flux magnétique principal, c'est-à-dire entre la structure de support et les parois latérales des aimants. Il est donc important de s'assurer que les parois latérales des aimants épousent au mieux les parois correspondantes de la structure de support.

Il est également important d'éviter des déplacements des aimants dans leur logement lors de la rotation du moteur. En effet, de tels déplacements sont susceptibles d'engendrer une augmentation de l'entrefer entre les aimants et la structure de support et donc une réduction des performances du moteur au cours de son fonctionnement.

A cet effet, il est possible de solidariser les aimants à la structure de support en les revêtant d'une matière adhésive, telle que de la colle ou du vernis, de manière à les faire adhérer aux parois des logements. Il est également possible d'injecter, une fois l'aimant inséré dans son logement, une matière amagnétique telle que de la résine à l'extrémité extérieure de l'aimant. Enfin, il est possible de bloquer les aimants dans leurs logements à l'aide de cales insérées à l'extrémité extérieure du logement entre la paroi extérieure du logement et l'extrémité extérieure de l'aimant.

Ces solutions ne donnent pas entière satisfaction. En effet, elles sont soit complexes à mettre en oeuvre, soit insuffisantes pour assurer un bon maintien des aimants contre la structure de support.

Un des buts de l'invention est de remédier à ces inconvénients et de proposer une structure de rotor simple et peu coûteuse à fabriquer et dans laquelle les entrefers sont minimisés.

A cet effet, l'invention a pour objet un rotor de moteur électrique tel que défini plus haut dans lequel la paroi extérieure comprend au moins une languette de retenue en saillie radialement vers l'intérieur du logement à partir de la paroi extérieure du logement de sorte à exercer un appui sur l'aimant de manière à bloquer l'aimant dans le logement selon la direction radiale.

Selon des modes particuliers de réalisation, le rotor selon l'invention comprend l'une ou plusieurs des caractéristiques suivantes, prise(s) isolément ou suivant toute(s) combinaison(s) techniquement possible(s):
- la languette de retenue est venue de matière avec la paroi extérieure du logement,
- la languette de retenue est formée au droit d'un évidement de la paroi extérieure selon la direction radiale,
- la languette de retenue comprend deux pattes de retenue, chaque patte de retenue comprenant une extrémité liée à la paroi extérieure du logement et une extrémité libre en appui contre l'aimant,
- le logement s'étend à travers la structure de support selon une direction radiale,
- il comprend deux languettes de retenue, espacées suivant une direction parallèle à un axe du rotor, et
- l'aimant est revêtu au moins partiellement d'une matière adhésive, par exemple de vernis ou de colle.

L'invention a également pour objet un procédé de fabrication d'un rotor de moteur électrique tel que décrit précédemment, comprenant les étapes successives de :
- fournir une structure de support munie d'au moins un logement ;
- insérer un aimant permanent dans le logement ;
- déformer une paroi extérieure du logement de sorte à former une languette de retenue en saillie radialement vers l'intérieur du logement à partir de la paroi extérieure du logement, la languette de retenue exerçant un appui sur l'aimant de manière à bloquer l'aimant dans le logement selon la direction radiale.

Selon des modes particuliers de réalisation, le rotor selon l'invention présente l'une ou plusieurs des caractéristiques suivantes, prise(s) isolément ou suivant toute(s) combinaison(s) techniquement possible(s)
- lors de l'étape de déformation, on déforme la paroi extérieure du logement par poinçonnage ou par emboutissage de manière à former la languette de retenue,
- lors de l'étape de déformation, on cisaille la paroi extérieure du logement de manière à former une languette de retenue comprenant deux pattes de retenue, chaque patte de retenue comprenant une extrémité liée à la paroi extérieure du logement et une extrémité libre en appui contre l'aimant, et
- avant l'étape de déformation, on revêt l'aimant avec une matière adhésive, notamment de la colle ou du vernis.

L'invention sera mieux comprise à la lecture de la description qui va suivre, donnée uniquement à titre d'exemple et faite en se référant aux dessins annexés, sur lesquels :
- la figure 1 est une vue schématique en perspective éclatée d'un rotor selon l'invention ;
- la figure 2 est une vue de dessus du rotor de la figure 1 ;
- la figure 3 est une vue schématique en coupe transversale d'un logement muni d'un aimant selon un premier mode de réalisation ;
- les figures 4 et 5 sont des vues schématiques en coupe transversale d'aimants selon des variantes ; et
- la figure 6 est une vue schématique en coupe transversale d'un logement muni d'un aimant selon un deuxième mode de réalisation.

Dans la suite de la description, les termes « extérieur » et « intérieur » sont utilisés en référence à l'axe A-A de rotation du rotor, la distance à cet axe augmentant de l'intérieur vers l'extérieur. La direction de l'axe A-A du rotor est appelée direction axiale.

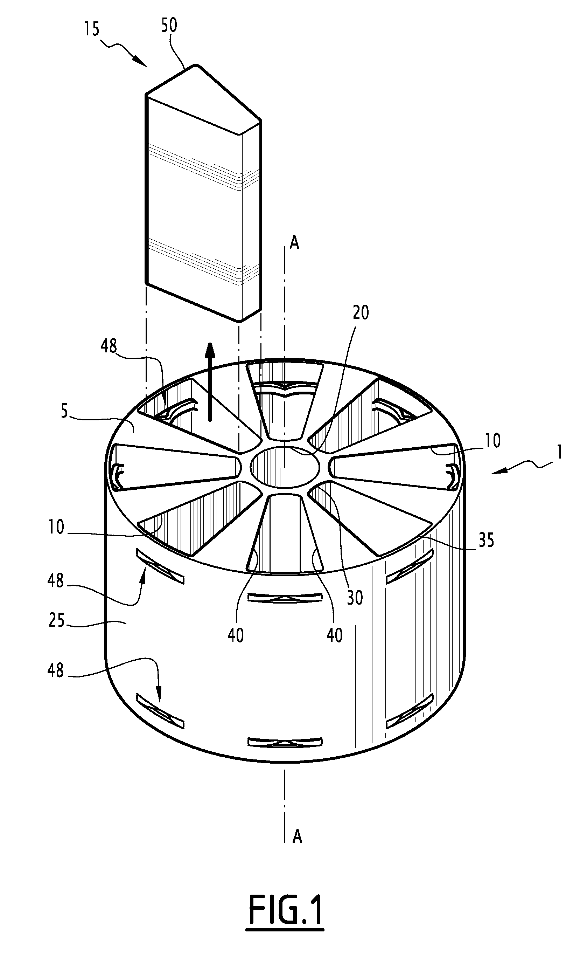

La figure 1 illustre schématiquement un rotor 1 de moteur électrique selon l'invention. Il est propre à coopérer avec un stator d'un moteur électrique pour entraîner en rotation un arbre de sortie solidaire du rotor 1. Le rotor 1 selon l'invention est destiné à être intégré à un moteur à rotor interne, c'est-à-dire qu'il est destiné à être agencé radialement à l'intérieur du stator.

Le rotor 1 selon l'invention est un rotor à concentration de flux. Il comprend une structure de support 5 dans laquelle sont formés des logements 10 recevant des aimants permanents 15.

La structure de support 5 présente une forme sensiblement cylindrique. Elle comprend un orifice central 20 s'étendant coaxialement à l'axe A-A et adapté pour recevoir l'arbre du moteur. Elle comprend une face intérieure, destinée à être orientée vers l'arbre du moteur lorsque le moteur est assemblé et une face extérieure 25, destinée à être orientée en regard du stator. La structure de support 5 est réalisée dans un matériau polaire, notamment en tôle magnétique en acier à grains orientés ou non. Elle est propre à conduire le flux magnétique produit par les aimants 15 et à canaliser ce flux magnétique en direction du stator lors du fonctionnement du moteur électrique.

Selon un mode de réalisation et de manière classique, la structure de support 5 est formée d'une pluralité de tôles empilées selon la direction axiale. Chaque tôle présente une forme sensiblement circulaire et s'étend sensiblement perpendiculairement à l'axe du rotor 1.

Les logements 10 sont distribués régulièrement autour de l'axe A-A du rotor 1. Dans le mode de réalisation représenté, les logements 10 s'étendent radialement entre la face intérieure de la structure de support 5 et sa face extérieure 25. Chaque logement 10 comprend une paroi intérieure 30 et une paroi extérieure 35 reliées entre elles par des parois latérales 40. Les parois latérales 40, la paroi intérieure 30 et la paroi extérieure 35 sont formées par la structure de support 5. La paroi extérieure 35 du logement 10 forme une partie de la face extérieure 25 de la structure 5. Dans le mode de réalisation représenté, les parois latérales 40 sont sensiblement planes et contiennent une direction parallèle à l'axe A-A. Elles s'éloignent l'une de l'autre de l'intérieur vers l'extérieur. La paroi extérieure 35 présente sensiblement la forme d'une portion de cylindre de concavité orientée vers la paroi intérieure 30. La paroi intérieure 30 présente sensiblement la forme d'une portion de cylindre de concavité orientée vers la paroi extérieure 35.

Chaque aimant 15 présente une forme sensiblement adaptée à la forme du logement 10, c'est-à-dire sensiblement complémentaire de celle du logement 10. Dans le mode de réalisation représenté sur la figure 1, les aimants 15 présentent une section sensiblement trapézoïdale.

La paroi extérieure 35 du logement 10 comprend une languette de retenue 48 propre à assurer le blocage de l'aimant 15 dans le logement 10. La languette de retenue 48 fait saillie vers l'intérieur du logement 10 en direction de l'axe A-A à partir de la paroi extérieure 35. Elle s'étend sensiblement radialement à partir de la paroi extérieure 35 et exerce un appui sur une face extérieure 50 de l'aimant 15. Elle bloque ainsi l'aimant 15 dans le logement 10 selon la direction radiale. La languette de retenue 48 est adaptée pour plaquer les faces latérales de l'aimant 15 contre les parois latérales 40 du logement 10 pour minimiser l'entrefer entre l'aimant 15 et la structure de support 5. Dans les modes de réalisation représentés, la languette de retenue 48 est sensiblement symétrique par rapport à un plan médian radial du logement 10. La languette de retenue 48 réduit les dimensions du logement 10 selon la direction radiale. Elle assure le sertissage de l'aimant 15 dans le logement 10.

La languette de retenue 48 est venue de matière avec la paroi extérieure 35 du logement 10. Elle est formée par une partie de la paroi extérieure 35 du logement 10. En particulier, la languette de retenue 48 résulte de l'enfoncement vers l'intérieur d'une partie de la paroi extérieure 35 du logement 10. Avantageusement, la languette de retenue 48 est obtenue par poinçonnage de la paroi extérieure 35.

Dans le mode de réalisation représenté, au droit de la languette de retenue 48 selon la direction radiale, la paroi extérieure 35 du logement 10 présente un évidement 49 résultant de la formation de la languette de retenue 48.

La languette de retenue 48 n'est liée à la paroi extérieure 35 que par ses deux extrémités circonférentielles. Elle est libre sur une majeure partie de sa longueur, prise selon la direction circonférentielle.

La paroi extérieure 35 s'étend sur toute la hauteur du rotor 1 en n'étant interrompue qu'en regard de la ou des languettes de retenue 48.

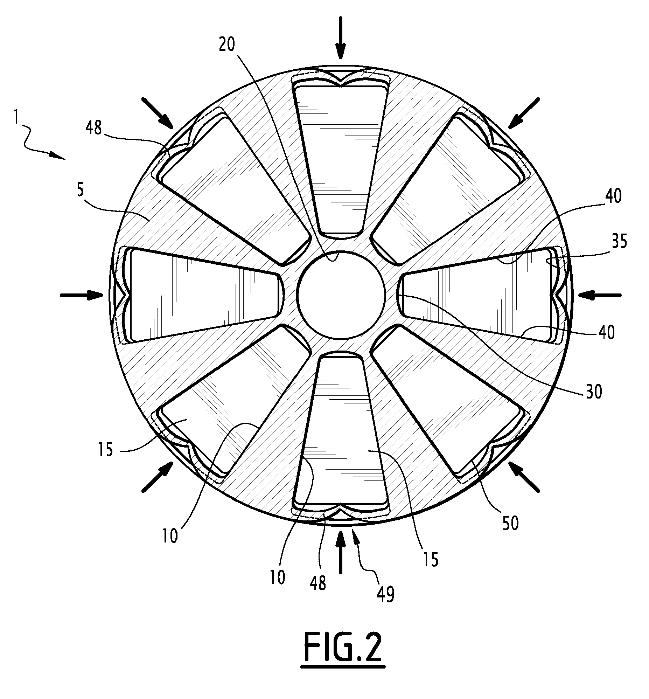

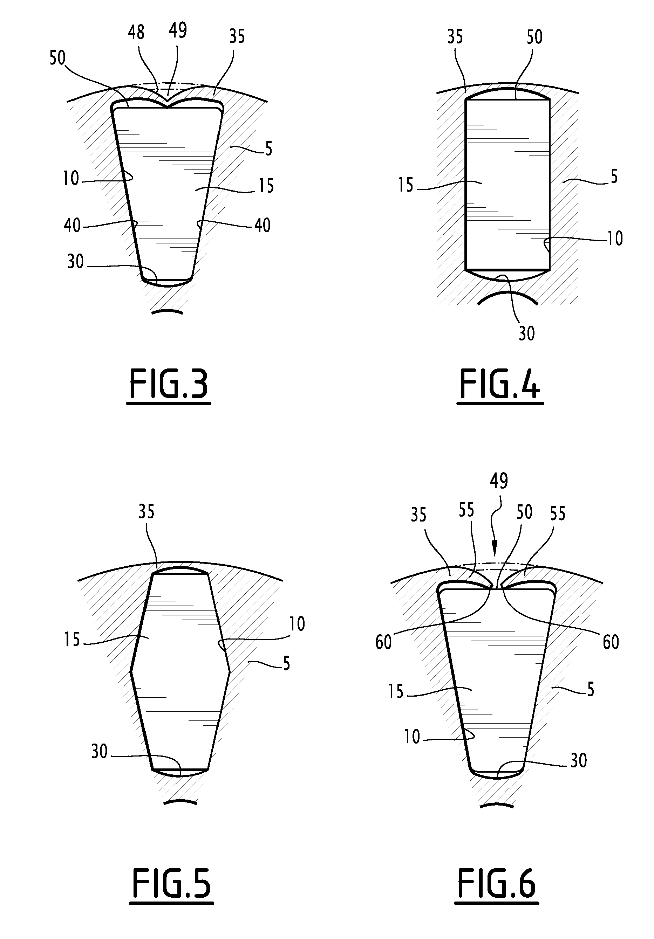

Selon le premier mode de réalisation représenté sur les figures 2 et 3, la languette de retenue 48 présente une forme de V de concavité dirigée vers l'extérieur et dont la pointe prend appui sur l'aimant 15.

Dans le mode de réalisation représenté, la languette de retenue 48 ne s'étend que sur une partie de la hauteur du logement 10, prise parallèlement à l'axe A-A. Dans ce mode de réalisation, le logement 10 comprend deux languettes de retenue 48 espacées selon la direction axiale. Les deux languettes de retenue 48 sont par exemple agencées au voisinage des extrémités axiales du logement 10.

En variante (non représentée), le logement 10 comprend plus de deux languettes de retenue 48. Les languettes de retenue 48 sont par exemple réparties régulièrement selon la direction axiale entre les extrémités axiales du logement 10. Elles sont sensiblement alignées selon la direction axiale.

Comme cela est notamment visible sur la figure 2, lors de l'insertion de l'aimant 15 dans le logement 10, i.e. avant la formation de la languette de retenue 48, il existe un espace selon la direction radiale entre la paroi intérieure 30 du logement 10 et la paroi intérieure de l'aimant 15, et entre la paroi extérieure 35 du logement et la paroi extérieure de l'aimant 15. Cet espace résulte en particulier de la forme arquée des parois intérieure 30 et extérieure 35.

Une fois l'aimant 15 inséré dans le logement 10, il existe un espace selon la direction radiale entre l'aimant 15 et la paroi intérieure 30 sur toute la hauteur du logement 10. L'aimant 15 est également espacé de la paroi extérieure 35 et ne prend contact avec la paroi extérieure 35 du logement 10 qu'au niveau des languettes de retenue 48.

Selon une autre variante, le logement 10 comprend une unique languette de retenue 48. Cette languette 48 est par exemple centrée entre les extrémités axiales du logement 10.

En option, au moins certaines des parois de l'aimant 15, en particulier les parois latérales, sont revêtues d'une matière adhésive, notamment de colle ou de vernis pour améliorer le maintien de l'aimant 15 dans le logement 10.

Le procédé de fabrication du rotor 1 selon le premier mode de réalisation va maintenant être expliqué.

Dans une première étape, on fournit une structure de support 5 munie de logements 10. La structure de support 5 a par exemple été réalisée préalablement par empilement de tôles de forme adaptée, chaque tôle ayant été préalablement percée de façon adéquate pour former une partie du logement 10.

Dans une deuxième étape, on insère les aimants 15 dans les logements 10 de la structure de support 5. L'insertion des aimants 15 est facilitée par la forme arquée des parois intérieure 30 et extérieure 35 du logement 10, qui laisse un espace selon la direction radiale pour permettre un glissement de l'aimant 15 dans le logement 10 sans exercer une pression trop importante sur l'aimant 15.

En outre, le fait de prévoir un degré de liberté pour l'insertion de l'aimant 15 selon la direction radiale permet d'ajuster au mieux l'aimant 15 à la forme du logement 10 selon la direction transversale.

Ainsi, on peut réaliser un aimant 15 dont les parois latérales épousent au plus près les parois latérales 40 du logement 10, ce qui supprime les entrefers selon la direction transversale et améliore les performances du moteur.

Dans une troisième étape, on déforme la paroi extérieure 35 des logements 10 de manière à former les languettes de retenue 48. A cet effet, on exerce sur la paroi extérieure 35 une pression dirigée radialement vers l'intérieur jusqu'à amener une portion de ladite paroi 35 en appui contre une face extérieure 50 de l'aimant 15. Avantageusement, on forme la languette de retenue 48 par poinçonnage de la paroi extérieure 35 du logement 10.

Les flèches de la figure 2 illustrent la direction de la force exercée sur la paroi extérieure 35 pour former les languettes de retenue 48.

Selon un mode de réalisation, on forme toutes les languettes de retenue 48 d'un même logement 10 simultanément. Avantageusement, on forme les languettes de retenue 48 de tous les logements 10 de la structure 5 simultanément.

Selon une variante du procédé, avant l'étape d'insertion des aimants 15 dans les logements 10, on enduit les aimants 15 d'une matière adhésive, notamment de colle ou de vernis. Lorsqu'ils sont insérés dans le logement 10, les aimants 15 adhèrent ainsi aux surfaces du logement 10 avec lesquelles ils sont en contact. Avantageusement, les aimants font corps avec le paquet de tôles pour éviter tous micro-mouvements entre eux.

Selon une variante du rotor selon le premier mode de réalisation, illustrée sur la figure 4, les aimants 15 présentent une section rectangulaire pour s'adapter à des logements 10 dont les parois latérales 40 sont sensiblement parallèles entre elles.

Selon une autre variante du rotor selon le premier mode de réalisation, illustrée sur la figure 5, les aimants 15 présentent une section en forme de losange pour d'adapter à des logements 10 dont la section transversale délimitée par les parois latérales 40 présente une forme de losange

La figure 6 illustre un rotor 1 selon un deuxième mode de réalisation. Ce rotor 1 ne diffère du rotor selon le premier mode de réalisation qu'en ce que la languette de retenue 48 comprend deux pattes de retenue 55. Chaque patte de retenue 55 s'incurve vers l'intérieur à partir de la paroi extérieure 35 cylindrique. Chaque patte de retenue 55 comprend une extrémité libre intérieure 60 en appui contre l'aimant 15 et une extrémité extérieure liée à la paroi extérieure 35. De même que dans le premier mode de réalisation, la languette de retenue 48 a été formée par déformation de la paroi extérieure 35. Dans le deuxième mode de réalisation, la matière de la paroi extérieure 35 a été cisaillée lors de sa déformation pour former deux pattes de retenue 55 séparées au niveau de leur extrémité intérieure 60.

Le procédé de fabrication du rotor selon le deuxième mode de réalisation ne diffère du procédé selon le premier mode de réalisation qu'en ce que lors de la déformation de la paroi extérieure 35 du logement 10 pour former la languette de retenue 48, on déforme la paroi extérieure 35 en exerçant sur celle-ci une pression dirigée vers l'intérieur selon la direction radiale jusqu'à cisailler la matière de la paroi extérieure 35. On obtient ainsi les deux pattes de retenue 55.

Dans tous les modes de réalisation, la languette de retenue, en exerçant un appui radial sur l'aimant, plaque l'aimant contre les parois latérales du logement et minimise ainsi l'entrefer entre l'aimant et la structure de support. La languette de retenue selon l'invention est avantageuse, car elle assure un blocage satisfaisant de l'aimant dans le logement quelles que soient les dimensions de l'aimant, puisque la languette de retenue est formée à partir de la paroi extérieure du logement de manière à venir en appui contre l'aimant.

Cet avantage est notamment dû au procédé de fabrication du rotor, au cours duquel la languette de retenue est formée après l'insertion de l'aimant dans le logement et s'adapte donc au mieux aux dimensions de l'aimant.

Le fait de former des languettes de retenue est également avantageux car celles-ci présentent une certaine élasticité qui les rend aptes à absorber les vibrations entre l'aimant et la structure dues à la force centrifuge lors de la rotation du rotor. Ceci est notamment le cas lorsqu'il n'y a pas d'autres élément de liaison comme la colle ou le vernis.

Le sertissage assure donc un blocage optimal de l'aimant dans le logement selon la direction radiale, tout en permettant une insertion aisée de l'aimant dans le logement.

Le procédé de fabrication du rotor selon l'invention présente également l'avantage d'être simple à mettre en oeuvre puisqu'il suffit de déformer la paroi en exerçant sur celle-ci une pression dirigée vers l'intérieur pour former la languette de retenue. En outre, ce procédé est facilement automatisable. Il est également rapide à mettre en oeuvre, puisque toutes les languettes de retenue peuvent être formées à l'aide d'un seul outil de déformation.

Enfin, on évite d'abîmer les aimants lors de leur insertion dans le logement. En effet, au moment de l'insertion, les dimensions radiales des logements sont supérieures à celles des aimants. Ces dimensions radiales ne sont réduites qu'après l'insertion de l'aimant dans le logement par la formation de la languette de retenue pour assurer le blocage de l'aimant dans son logement.

En variante ou en option, les parois internes du logement 10 sont revêtues au moins partiellement d'une matière adhésive, en particulier de colle ou de vernis pour améliorer le maintien de l'aimant 15 dans le logement 10.

Lorsque l'aimant 15 et/ou les parois internes du logement 10 sont revêtues d'une matière adhésive, l'espace existant selon la direction radiale entre l'aimant 15 et les parois intérieure 30 et extérieure 35 du logement 10 laisse un jeu suffisant en vue de positionner l'aimant 15 dans le logement 10 sans risque de supprimer une partie de la colle au préalable déposée soit sur les aimants 15, soit sur les parois internes des logements 10.

## Revendications

1. Rotor (1) de moteur électrique comprenant une structure de support (5) munie d'au moins un logement (10) dans lequel est logé un aimant permanent (15), le logement (10) comprenant une paroi extérieure (35), laquelle comprend au moins une languette de retenue (48) en saillie radialement vers l'intérieur du logement (10) à partir de la paroi extérieure (35) du logement (10) de sorte à exercer un appui sur l'aimant (15) de manière à bloquer l'aimant (15) dans le logement (10) selon la direction radiale, un espace existant selon la direction radiale entre les parois extérieure (35) et/ou intérieure (30) du logement (10) et l'aimant (15) logé dans le logement (10).

2. Rotor (1) selon la revendication 1, dans lequel la languette de retenue (48) est venue de matière avec la paroi extérieure (35) du logement.

3. Rotor (1) selon l'une des revendications 1 et 2, dans lequel la languette de retenue (48) est formée au droit d'un évidement (49) de la paroi extérieure (35) selon la direction radiale.

4. Rotor (1) selon l'une quelconque des revendications 1 à 3, dans lequel la languette de retenue (48) comprend deux pattes de retenue (55), chaque patte de retenue comprenant une extrémité liée à la paroi extérieure (35) du logement (10) et une extrémité libre (60) en appui contre l'aimant (15).

5. Rotor (1) de moteur électrique selon l'une quelconque des revendications précédentes, dans lequel le logement (10) s'étend à travers la structure de support (15) selon une direction radiale.

6. Rotor (1) de moteur électrique selon l'une quelconque des revendications précédentes, comprenant au moins deux languettes de retenue (48), espacées suivant une direction parallèle à un axe du rotor (1).

7. Rotor (1) de moteur électrique selon l'une quelconque des revendications précédentes, dans lequel l'aimant (15) et/ou les parois internes du logement (10) sont revêtus au moins partiellement d'une matière adhésive, par exemple de vernis ou de colle.

8. Procédé de fabrication d'un rotor (1) de moteur électrique selon l'une quelconque des revendications 1 à 7, comprenant les étapes successives de :
- fournir une structure de support (5) munie d'au moins un logement (10) ;
- insérer un aimant permanent (15) dans le logement (10) ;
- déformer une paroi extérieure (35) du logement (10) de sorte à former une languette de retenue (48) en saillie radialement vers l'intérieur du logement (10) à partir de la paroi extérieure (35) du logement (10), la languette de retenue (48) exerçant un appui sur l'aimant (15) de manière à bloquer l'aimant (15) dans le logement (10) selon la direction radiale.

9. Procédé de fabrication selon la revendication 8, dans lequel, lors de l'étape de déformation, on déforme la paroi extérieure (35) du logement (10) par poinçonnage ou par emboutissage de manière à former la languette de retenue (48).

10. Procédé selon l'une des revendications 8 et 9, dans lequel lors de l'étape de déformation, on cisaille la paroi extérieure (35) du logement (10) de manière à former une languette de retenue (48) comprenant deux pattes de retenue (55), chaque patte de retenue (55) comprenant une extrémité liée à la paroi extérieure (35) du logement (10) et une extrémité libre (60) en appui contre l'aimant (15).

11. Procédé selon l'une quelconque des revendications 8 à 10, dans lequel, avant l'étape de déformation, on revêt l'aimant (15) avec une matière adhésive, notamment de la colle ou du vernis.
